# FASCICULE DE BREVET EUROPEEN

(11) **EP 0 750 079 B1**
(45) Date de publication et mention de la délivrance du brevet: **21.08.2002**
(21) Numéro de dépôt: 96401379.1
(22) Date de dépôt: 21.06.1996
(51) Int. Cl.: E04C 3/28, E04C 3/46, B32B 17/10

(54) **Procédé de fabrication d'un élément de structure composite et élément en résultant**
Verfahren zur Herstellung eines Bauelements aus Verbundwerkstoff und so hergestellter Gegenstand
Method of manufacturing a composite structural element and article thus obtained

(30) Priorité: 22.06.1995 FR 9507516; 06.12.1995 FR 9514436
(43) Date de publication de la demande: 27.12.1996
(73) Titulaire: SAINT-GOBAIN GLASS FRANCE, 92400 Courbevoie (FR)
(72) Inventeur: Dussouchaux, Yannick, 33230 Coutras (FR); Bernaguaud, Dominique, 33420 Genissac (FR)
(74) Mandataire: Le Cam, Stéphane Georges Elie

(56) Documents cités:
- EP-A- 0 611 854
- DE-A- 2 903 103
- DE-A- 4 140 537
- DE-C- 897 755
- FR-A- 2 714 409
- PATENT ABSTRACTS OF JAPAN vol. 15, no. 239 (M-1126) 20 Juin 1991 & JP-A-03 075 143 (TEIJIN CHEM. LTD.) 29 Mars 1991

## Description

La présente invention concerne un élément de structure, généralement transparent, susceptible de servir de support et présentant les propriétés mécaniques requises aussi bien pour des applications architecturales que purement techniques.

L'emploi du verre minéral pour remplacer des matériaux plus traditionnels comme le béton armé ou les métaux dans la réalisation d'élément de structure, tels que des éléments allongés du genre colonnes ou poteaux, est connu en soi. Le verre peut entrer dans la composition de ces éléments de structure sous différentes formes notamment sous la forme de fils continus, de billes, de plaques ou de tubes. Plusieurs de ces formes sont parfois combinées et associées à une matière organique pour former des éléments de structure composite.

De tels éléments de structure sont décrits, par exemple, dans la demande de brevet WO-93/01372. Cette demande, qui a pour objet, notamment, de remplacer les poteaux ou pylônes métalliques ou en béton par des poteaux ou pylônes transparents, propose des éléments de structure formés par l'association d'éléments de verre du type tige, tube, plaques, billes, etc, de fibres transparentes telles que des fibres de verre et une résine transparente. Ces éléments de structure permettent d'obtenir le meilleur compromis possible entre la transparence et les propriétés mécaniques désirées. La réalisation de ces éléments nécessitent plusieurs étapes plus ou moins longues et/ou l'utilisation de produits verriers dont le coût n'est pas négligeable, tels que des tubes de verre ou de plaques obtenues à partir de tissu de verre, ainsi que l'emploi en quantité relativement importante de résine dont le coût est beaucoup plus élevé que le verre. Au plan économique cela diminue l'intérêt que présentent de tels éléments de structure.

Comme la document précédent, la demande WO-A-95/18277 décrit des structures porteuses essentiellement réalisées à partir de verre minéral et/ou organique. Ces structures dont la forme est plus ou moins complexe peuvent être notamment obtenues par assemblages d'éléments plans découpés dans des plaques de verre feuilleté. Ces éléments peuvent être réunis par collage à l'aide, par exemple, d'une couche de silicone. Ce document n'est cité qu'au titre de l'article 158(2) de la CBE.

Il est également connu d'après la demande DE-A-2 903 103 de réaliser des aquariums en assemblant par collage des éléments plans découpés dans des plaques de verre feuilleté. La nature de l'agent de collage n'est pas précisée.

La demande EP-A-0 611 854 décrit pour sa part un panneau composite destiné au revêtement de parois et qui comporte au moins une feuille (feuille simple ou verre feuilleté) sur laquelle est collée une plaque de métal à l'aide d'une matière telle que le PVB ou le PU.

La présente invention a pour but un élément de structure composite à base de verre minéral qui offre le meilleur compromis entre son coût de fabrication et les caractéristiques demandées à une telle structure.

La présente invention a pour but un procédé de fabrication d'un tel élément de structure qui permet d'utiliser les produits verriers les moins onéreux possibles et de limiter le nombre d'opérations nécessaires.

Ces buts sont atteints par un procédé de fabrication qui consiste :
a) à découper dans une plaque de verre feuilletée, comprenant au moins deux feuilles de verre minéral séparées par une feuille de matière organique, quatre éléments de verre dont la longueur représente au moins dix fois la largeur,
b) à déposer sur les chants les plus longs de deux de ces éléments une substance composée, au moins en partie, d'une matière organique identique à celle séparant les feuilles de verre desdits éléments,
c) à appliquer les bords les plus longs des deux autres éléments sur lesdits chants de manière à former un volume creux à section droite carrée ou rectangulaire,
d) à soumettre l'ensemble ainsi assemblé à un traitement thermique et, éventuellement, à l'action simultanée, d'une pression supérieure à la pression atmosphérique.

Les verres feuilletés utilisés comme matériau de départ dans le cadre du procédé selon l'invention sont, de préférence, des verres feuilletés fabriqués en grande quantité et dont le coût doit être le plus faible possible. Il s'agit généralement de verres feuilletés obtenus par chauffage et calandrage de feuilles de verre silico-sodo-calcique et de feuilles de polyvinylbutyral (PVB).

Lorsque les éléments utilisés dans le procédé selon l'invention sont découpés dans de tels feuilletés et que les chants desdits éléments présentent une très bonne planéité, la matière déposée sur lesdits chants peut être formée de bandes découpées dans une feuille de PVB. Lorsque la planéité des chants des éléments est médiocre la matière assurant le collage desdits éléments est, de préférence, appliquée sous la forme d'une pâte formée d'une suspension de poudre de PVB dans un liant. Lorsque les éléments sont assemblés la pâte se répartit alors de manière à compenser les défauts de planéité.

Il est important dans le cadre de la présente invention d'utiliser comme joint de collage une matière identique à celle séparant les feuilles de verre. En effet, l'utilisation d'une matière de collage autre que celle employée pour réaliser le verre feuilleté peut être à l'origine de bulles qui se forment dans le temps sous l'action des variations de température et des intempéries lorsque l'élément de structure est exposé à l'extérieur. La formation de tels défauts peut provoquer à terme une dégradation du joint de collage et altérer de ce fait les propriétés mécaniques de l'élément de structure. L'utilisation pour le collage des éléments d'une matière qui ne présente aucune incompatibilité chimique avec la matière organique employée pour la réalisation des verres feuilletés permet d'éviter la formation de tels défauts.

La polymérisation de la matière servant de joint de collage peut être assurée uniquement à l'aide d'un traitement thermique. Cela peut être effectué par un déplacement de l'élément de structure, au travers d'un four à micro-ondes programmé en conséquence. Ce mode de polymérisation est particulièrement approprié pour les éléments de structure de grande longueur qui ne pourraient pas être enfermés dans un autoclave.

Les éléments de structure de plus faible longueur peuvent être soumis simultanément à un traitement thermique et à une pression supérieure à la pression atmosphérique grâce à un autoclave.

Lorsque les éléments de structure sont destinés à être installés en plein air il est souhaitable de prévoir un façonnage des arêtes desdits éléments de manière à éviter l'apparition de fissures dues aux chocs thermiques qui résultent des écarts entre les températures diurnes et nocturnes.

Les éléments de structure obtenus selon l'invention sont plus particulièrement destinés à former des colonnes, piliers, poteaux, pylônes prismatiques creux dont la longueur peut dépasser 4 mètres et atteindre 9 mètres, voire 12 mètres selon les applications envisagées.

Ces éléments de structure peuvent avoir une section droite constante sur toute leur longueur ou qui diminue d'une de leur extrémité à l'autre. En fonction des caractéristiques désirées le nombre et l'épaisseur des feuilles de verre qui constituent le verre feuilleté peuvent varier. L'épaisseur des feuilles de verre varie généralement de 3 à 10 millimètres.

Les éléments de grande longueur sont particulièrement appropriés pour servir de supports à des conducteurs de lignes aériennes de transmission électrique. A titre d'exemple, un support de 6 mètres de longueur a été réalisé à partir de verre feuilleté formé de trois feuilles de verre de 8 millimètres d'épaisseur séparées par des feuilles de PVB de 0,76 millimètre d'épaisseur. Le verre feuilleté a été découpé en quatre trapèzes de 6 mètres de hauteur, la longueur des bases de ces trapèzes étant de 600 et de 300 millimètres.

Un support de même longueur a été réalisé à partir de quatre trapèzes de 6 mètres de hauteur, la longueur des bases de ces trapèzes étant de 600 et de 300 millimètres. Ces trapèzes ont été découpés dans une plaque de verre feuilleté semblable à celle utilisée pour réaliser le support précédemment décrit. L'assemblage de ces quatre trapèzes définit un support pyramidal tronqué dont le sommet et la base peuvent être fermés au moyen de plaques cassées de verre feuilleté.

La nature même des matériaux utilisés pour la fabrication des éléments de structure selon l'invention permet d'avoir un support isolant en soi contrairement aux supports traditionnels des lignes électriques aériennes qui sont métalliques ou en béton armé. Cela constitue dans cette application un facteur de sécurité supplémentaire.

Indépendamment des caractéristiques techniques propres aux éléments de structure selon l'invention, le caractère esthétique de ces derniers n'est pas leur moindre avantage. Le verre utilisé pour la réalisation de ces éléments est généralement un verre silico-sodo-calcique plus ou moins coloré par des agents colorants apportés comme impuretés dans les matières premières vitrifiables employées pour élaborer ce verre et/ou ajoutés volontairement dans le mélange vitrifiable. Les agents colorants les plus couramment utilisés sont les oxydes de fer, de cobalt et de chrome. En modifiant la concentration de chacun de ces oxydes dans le verre et/ou en modifiant leurs proportions relatives, il est possible d'obtenir des verres gris, bleus ou verts, dont la coloration sera plus ou moins profonde et la transparence plus ou moins grande.

Ainsi, les éléments de structure selon l'invention, utilisés par exemple comme pilier ou poutre, peuvent remplir à la fois des fonctions technique et esthétique et trouver des applications en matière d'architecture. Les éléments de structure selon l'invention peuvent notamment servir de colonnes lumineuses destinées à l'éclairage public. La source de lumière disposée à la base de la colonne permet une diffusion de la lumière sur toute sa hauteur.

Les supports pour lignes aériennes ou les colonnes lumineuses ne sont que des exemples de réalisation nullement limitatifs de la présente invention.

## Revendications

1. Procédé de fabrication d'un élément de structure composite à base de verre minéral et de résine organique formé à partir de 4 éléments découpés dans une plaque de verre feuilletée, comprenant au moins deux feuilles de verre minéral séparées par une feuille de matière organique, **caractérisé en ce qu'**il consiste :
a) à déposer sur les chants les plus longs de deux de ces éléments une substance composée, au moins en partie, d'une matière organique identique à celle séparant les feuilles de verre desdits éléments,
b) à appliquer les bords les plus longs des deux autres éléments sur lesdits chants de manière à former un volume creux à section droite carrée ou rectangulaire,
c) à soumettre l'ensemble ainsi assemblé à un traitement thermique et, éventuellement, à l'action simultanée, d'une pression supérieure à la pression atmosphérique.

2. Procédé selon la revendication 1, **caractérisé en ce que** les éléments sont découpés dans un verre feuilleté formé de feuilles de verre séparées par des feuilles de polyvinylbutyral (PVB).

3. Procédé selon la revendication 2, **caractérisé en ce que** la matière déposée sur le chant des éléments se présente sous la forme de bandes découpées dans une feuille de PVB.

4. Procédé selon la revendication 2, **caractérisé en ce que** la matière déposée sur le chant des éléments est appliquée sous la forme d'une pâte formée d'une suspension de poudre de PVB dans un liant.

5. Procédé selon l'une quelconque des revendications précédentes, **caractérisé en ce que** l'ensemble des éléments assemblés est soumis à l'action de la chaleur en déplaçant ledit ensemble à travers un four à micro-ondes.

6. Procédé selon l'une des revendications 1 à 4, **caractérisé en ce que** l'ensemble des éléments assemblés est soumis à un traitement thermique et à l'action simultanée d'une pression supérieure à la pression atmosphérique en plaçant ledit ensemble dans un autoclave.

7. Elément de structure réalisé par le procédé par l'une quelconque des revendications précédentes, **caractérisé en ce qu'**il forme un volume prismatique creux dont les parois sont formées d'éléments découpés dans une plaque de verre feuilleté constitué de feuilles de verre silico-sodo-calcique séparées par des feuilles de PVB, lesdits éléments étant assemblés au niveau des chants par une substance renfermant du PVB traitée thermiquement.

8. Elément de structure selon la revendication 7, **caractérisé en ce que** le verre utilisé contient un ou plusieurs agents colorants tels que des oxydes de fer, de cobalt et de chrome.

9. Elément de structure selon l'une quelconque des revendications 7 et 8, **caractérisé en ce que** l'épaisseur des feuilles de verre formant le verre feuilleté est généralement comprise entre 3 et 10 millimètres.

## Patentansprüche

1. Verfahren zur Herstellung eines auf anorganischem Glas und organischem Harz basierenden Verbundkonstruktionselements, das aus Komponenten gebildet ist, die aus einer Verbundglasscheibe zugeschnitten werden, die mindestens zwei anorganische Glasscheiben umfasst, die durch eine Folie aus organischem Material getrennt sind, **dadurch gekennzeichnet, dass** es darin besteht:
a) auf den längeren Kanten von zwei der Komponenten eine Substanz aufzubringen, die wenigstens teilweise aus einem organischen Material zusammengesetzt ist, das gleich demjenigen ist, das die Glasscheiben dieser Komponenten trennt,
b) die längeren Ränder der zwei anderen Komponenten an die Kanten derart anzudrücken, dass sich ein Hohlraum mit quadratischem oder rechteckigem Querschnitt bildet, und
c) die so zusammengebaute Einheit einer Wärmebehandlung und gegebenenfalls der gleichzeitigen Einwirkung eines über dem Atmosphärendruck liegenden Drucks zu unterwerfen.

2. Verfahren nach Anspruch 1, **dadurch gekennzeichnet, dass** die Komponenten aus einem Verbundglas zugeschnitten werden, das aus Glasscheiben gebildet ist, die durch Folien aus Polyvinylbutyral (PVB) getrennt sind.

3. Verfahren nach Anspruch 2, **dadurch gekennzeichnet, dass** das auf der Kante der Komponenten aufgebrachte Material in Form von Bändern vorliegt, die aus einer PVB-Folie zugeschnitten worden sind.

4. Verfahren nach Anspruch 2, **dadurch gekennzeichnet, dass** das auf der Kante der Komponenten aufgebrachte Material in Form einer Paste aufgebracht wird, die aus einer Suspension eines PVB-Pulvers in einem Bindemittel gebildet ist.

5. Verfahren nach einem der vorhergehenden Ansprüche, **dadurch gekennzeichnet, dass** die Einheit aus zusammengebauten Komponenten der Wärmeeinwirkung unterworfen wird, indem sie durch einen Mikrowellenofen geschickt wird.

6. Verfahren nach einem der Ansprüche 1 bis 4, **dadurch gekennzeichnet, dass** die Einheit aus zusammengebauten Komponenten einer Wärmebehandlung und der gleichzeitigen Einwirkung eines über dem Atmosphärendruck liegenden Drucks unterworfen wird, indem diese Einheit in einem Autoklaven angeordnet wird.

7. Konstruktionselement, hergestellt durch das Verfahren nach einem der vorhergehenden Ansprüche, **dadurch gekennzeichnet, dass** es einen prismatischen Hohlraum bildet, dessen Wände von Komponenten gebildet werden, die aus einer Verbundglasscheibe zugeschnitten worden sind, die aus durch PVB-Folien getrennten Scheiben aus Kalk-Natron-Silicatglas besteht, wobei diese Komponenten an den Kanten durch eine wärmebehandelte, PVB enthaltende Substanz zusammengefügt sind.

8. Konstruktionselement nach Anspruch 7, **dadurch gekennzeichnet, dass** das verwendete Glas ein oder mehrere Farbmittel wie die Oxide des Eisens, Cobalts und Chroms enthält.

9. Konstruktionselement nach Anspruch 7 oder 8, **dadurch gekennzeichnet, dass** die Dicke der Glasscheiben, die das Verbundglas bilden, im Allgemeinen 3 bis 10 Millimeter beträgt.

## Claims

1. Method of manufacturing a composite structural element based on mineral glass and organic resin formed from four elements cut from a laminated glass plate, comprising at least two sheets of mineral glass separated by a sheet of organic material, **characterised in that** it consists of:
a) depositing on the longest edges of two of these elements a substance composed, at least partly, of an organic material identical to that separating the sheets of glass of the said elements,
b) applying the longest sides of the other two elements to the said edges so as to form a hollow volume with a square or rectangular cross-section,
c) subjecting the assembly thus assembled to a heat treatment and possibly to the simultaneous action of a pressure greater than atmospheric pressure.

2. Method according to Claim 1, **characterised in that** the elements are cut from a laminated glass formed from sheets of glass separated by two sheets of polyvinyl butyral (PVB).

3. Method according to Claim 2, **characterised in that** the material deposited on the edge of the elements is in the form of strips cut from a sheet of PVB.

4. Method according to Claim 2, **characterised in that** the material deposited on the edge of the elements is applied in the form of a paste formed from a suspension of PVB powder in a binder.

5. Method according to any one of the preceding claims, **characterised in that** the assembly consisting of the assembled elements is subjected to the action of heat by moving the said assembly through a microwave oven.

6. Method according to one of Claims 1 to 4, **characterised in that** the assembly consisting of the assembled elements is subjected to a heat treatment and to the simultaneous action of a pressure greater than atmospheric pressure by placing the said assembly in an autoclave.

7. Structural element produced by means of the method by any one of the preceding claims, **characterised in that** it forms a hollow prismatic volume whose walls are formed from elements cut from a laminated glass plate consisting of sheets of soda-lime-silica glass separated by sheets of PVB, the said elements being assembled at the edges by a substance enclosing the heat-treated PVB.

8. Structural element according to Claim 7, **characterised in that** the glass used contains one or more colouring agents such as oxides of iron, cobalt and chromium.

9. Structural element according to either one of Claims 7 and 8, **characterised in that** the thickness of the glass sheets forming the laminated glass is generally between 3 and 10 millimetres.
